## Europäisches Patentamt
## European Patent Office
## Office européen des brevets

(19)

(11) Numéro de publication: **0 159 206**
**B1**

(12) # FASCICULE DE BREVET EUROPEEN

(45) Date de publication du fascicule du brevet:
**16.09.87**

(51) Int. Cl.⁴: **B 60 J 5/06**

(21) Numéro de dépôt: **85400255.7**

(22) Date de dépôt: **14.02.85**

(54) **Portes d'accès latérales de carrosseries de véhicules, conteneurs, et caisses mobiles.**

(30) Priorité: **22.03.84 FR 8404456**

(43) Date de publication de la demande:
**23.10.85 Bulletin 85/43**

(45) Mention de la délivrance du brevet:
**16.09.87 Bulletin 87/38**

(84) Etats contractants désignés:
**AT BE CH DE FR GB IT LI LU NL SE**

(56) Documents cités:
**FR - A - 2 273 702
FR - A - 2 414 434
GB - A - 967 796
GB - A - 1 230 296**

(73) Titulaire: **ASSOCIATION OUVRIERE DES COMPAGNONS DU DEVOIR DU TOUR DE FRANCE ATELIERS SAINTE-CATHERINE, Route de Rambouillet, F-78680 Epône (FR)**

(72) Inventeur: **Deschamp, Roger, 22, rue de la Côte, F-92500 Rueil Malmaison (FR)**
Inventeur: **Solomiac, Jean Pierre, 7, rue Audran, F-94400 Vitry Sur Seine (FR)**

(74) Mandataire: **Schrimpf, Robert et al, Cabinet Regimbeau 26, Avenue Kléber, F-75116 Paris (FR)**

ACTORUM AG

## Description

La présente invention concerne les véhicules, les conteneurs et les caisses mobiles dont la carrosserie est conçue pour permettre le chargement et le déchargement, sur toute la longueur, par une ouverture d'accès latérale fermée par des moyens appropriés.

Les dispositifs de fermeture connus se présentent le plus souvent:

— soit sous la forme d'une toile, raidie verticalement de part en part, par des sangles souples,

— soit par des panneaux rigides coulissants se dégageant en se superposant ou se repliant en accordéon parallèlement à l'axe longitudinal de la carrosserie, pour laisser la possibilité de chargement par le côté.

Dans le cas de la toile, le dégagement d'ouverture en une seule fois peut être égal ou supérieur à 80% de la possibilité globale d'ouverture, ce qui est un avantage; cependant, on se trouve devant la vulnérabilité d'une toile en ce qui concerne le maintien de la charge et la sécurité en cas de vol par effraction en découpant la toile avec un objet coupant. Une telle réalisation est par exemple bien décrite dans FR-A-2 414 434 ou GB-A-1 230 296, où il est prévu d'accrocher une toile en rideau à des montants coulissants, l'ouverture se faisant par un pliage en accordéon.

Dans le cas de panneaux rigides coulissants, se superposant longitudinalement, parallèlement à l'axe de la carrosserie, la vulnérabilité de la paroi contre le vol est supprimée, ce qui est un avantage. Cependant, le dégagement d'ouverture est inférieur, ou au plus égal à 50% de la possibilité globale d'ouverture; de plus dans le cas de déplacement accidentel en cours de transport, d'une charge non ou mal arrimée, cette charge venant en appui sur le panneau, on se trouve dans l'impossibilité de faire coulisser longitudinalement ledit panneau, donc dans l'impossibilité de dégager l'ouverture pour le déchargement, ceci même si ledit panneau s'est dégagé légèrement transversalement, lors de l'ouverture, avant coulissement.

Dans le cas de panneaux rigides articulés, le dégagement d'ouverture est meilleur, mais la souplesse d'utilisation reste insuffisante. Une telle réalisation est par exemple décrite dans FR-A-2 273 702 et GB-A-967 796 (correspondant au préambule de la revendication 1).

La conception décrite dans FR-A-2 273 702 comporte des panneaux articulés entre eux par des charnières, avec un système de guidage par galets et doigts aux extrémités opposées de chaque série de deux panneaux consécutifs, l'ensemble se repliant en accordéon; il est éventuellement prévu aux extrémités de l'ensemble articulé, un simple panneau battant formant porte.

Dans GB-A-967 796, il est également prévu un ensemble de panneaux articulés entre eux, repliable en accordéon; un ensemble replié peut devenir battant autour des montants verticaux d'extrémité, par dégagement des galets de guidage en bout de leur piste.

La présente invention, par rapport aux dispositifs connus précédemment décrits, en conserve les avantages, sans en avoir les inconvénients.

En outre, l'invention ajoute aux avantages connus la possibilité de n'ouvrir que partiellement la paroi de fermeture à tout endroit voulu en laissant fermé le reste de la paroi.

On y parvient, selon l'invention, par le fait que les panneaux déplaçables sont des portes battantes, articulées à des montants verticaux aptes à coulisser le long de l'ouverture, certains au moins desdits montants étant communs à deux portes qui se trouvent respectivement à droite et à gauche du montant correspondant.

Parmi les autres caractéristiques préférées selon l'invention, on citera notamment les suivantes, que l'on peut combiner entre elles, comme on le comprendra à la lumière de la description:

— les montants sont munis en partie haute d'un dispositif apte à coulisser le long d'un rail qui s'étend dans la longueur de l'ouverture,

— ledit rail est prolongé à une extrémité ou aux deux par des rails complémentaires, escamotables ou basculants, qui permettent de déplacer les montants au-delà de ladite ouverture afin de dégager totalement l'ouverture,

— les montants sont munis en partie basse d'un dispositif apte à accrocher le montant, de façon détachable, à la carrosserie,

— les portes battantes sont fixées aux montants par des charnières permettant de faire pivoter les portes vers l'extérieur jusqu'à ce qu'elles occupent une position sensiblement perpendiculaire au plan de l'ouverture,

— il est en outre prévu des portes d'extrémités montées battantes sur des montants fixes solidaires de la carrosserie,

— pour chaque couple de portes respectivement solidaires d'un montant et d'un montant voisin, des moyens sont prévus pour fixer les deux portes l'une à l'autre, de façon détachable, en position de fermeture, et en ce que des moyens sont prévus pour verrouiller l'une des portes à la carrosserie, de façon détachable, en position de fermeture, comme pour fermer une porte à deux battants.

On comprend que l'ensemble des portes et des montants constitue, en position de fermeture, une poutre apte à résister aux efforts de flexion susceptibles d'être imposés à la poutre par les conditions de service.

On décrira ci-après, à titre d'exemple non limitatif, une réalisation typique d'une carrosserie conforme à l'invention, en référence aux figures du dessin joint sur lequel:

— la figure 1 est une élévation latérale d'un semi-remorque équipé conformément à l'invention vu du côté de l'ouverture d'accès;

— les figures 2 et 3 sont des coupes de l'ouverture d'accès, par un plan horizontal, suivant A-A de la figure 1, respectivement en position fermée et en position ouverte;

— les figures 4 et 5 sont des vues partielles de la carrosserie, respectivement en vue avant et en vue arrière;

— la figure 6 est une coupe verticale transversale dans la partie supérieure de l'ouverture, au niveau d'une porte, montrant les moyens d'étanchéité de l'ouverture à cet endroit;
— les figures 7 et 8 sont des coupes verticales transversales d'un montant, respectivement en partie haute et en partie basse du montant;
— la figure 9 est une vue de face de la partie supérieure d'un montant;
— la figure 10 est une coupe de la carrosserie dans la région de l'ouverture par le plan horizontal B-B de la figure 9, et

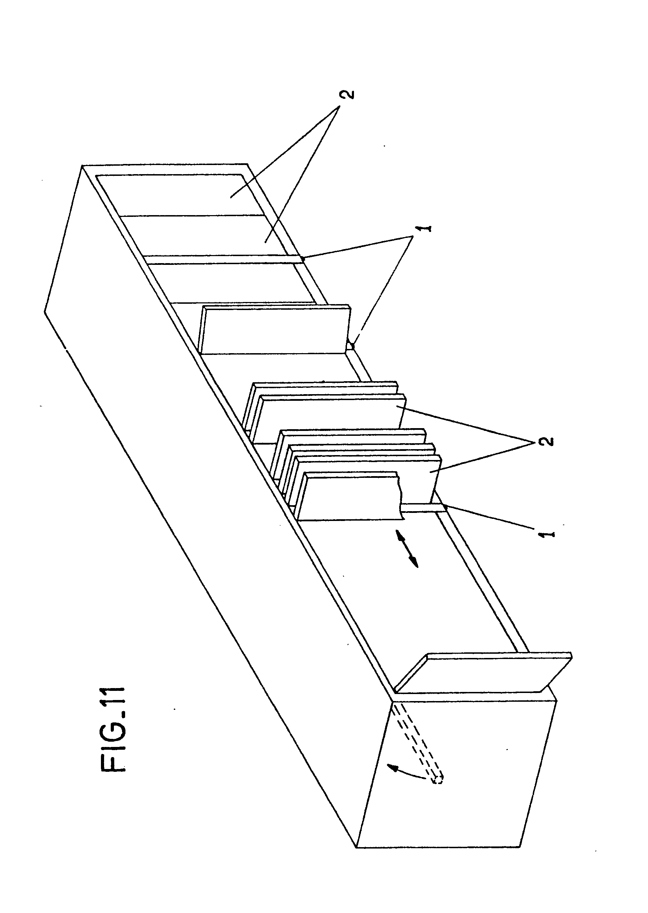

— la figure 11 est une perspective montrant la carrosserie partiellement ouverte.

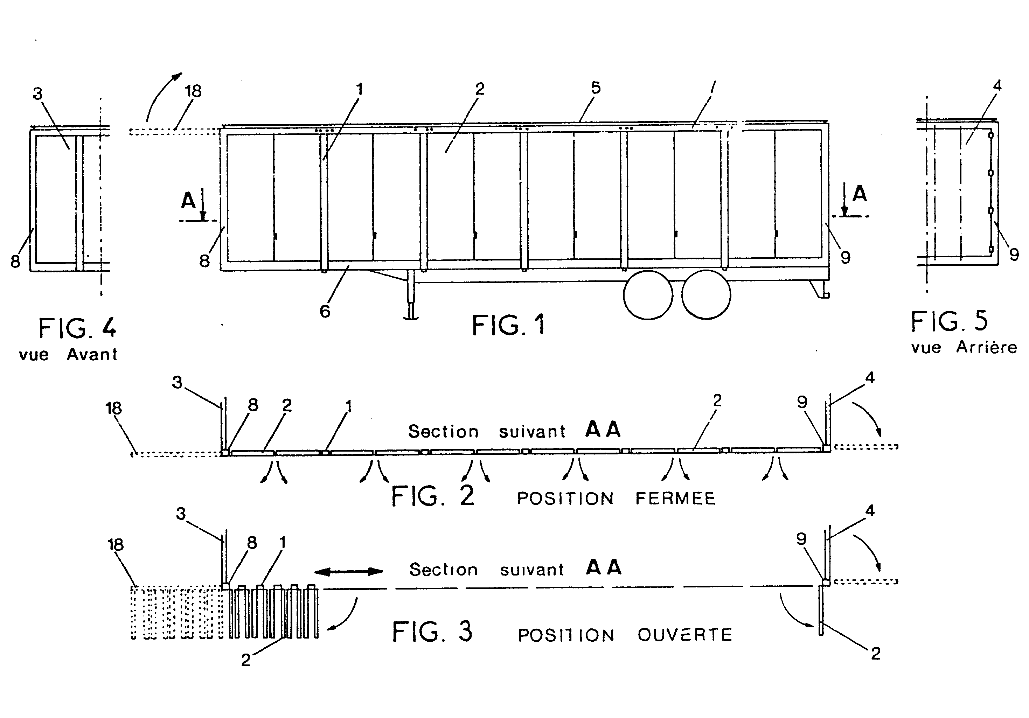

Le système représenté sur la figure 1, comporte des montants convoyeurs de portes 1 sur lesquels s'articulent des portes battantes 2.

En position fermée, sur la figure 2, les portes 2 forment avec les montants convoyeurs de portes 1 une paroi rigide comparable en résistance et en comportement à une paroi latérale fixe. Le tout forme une poutre dessinée pour résister à des efforts de flexion.

En position ouverte, sur la figure 3, les portes 2 solidaires des montants convoyeurs de portes 1 permettent une ouverture latérale égale à 85 % de la possibilité globale d'ouverture. De plus, le fait d'avoir des portes battantes et non repliables en accordéon permet le dégagement d'une charge qui se serait déplacée accidentellement en cours de transport.

La carrosserie objet de cette invention, est constituée d'une part, par une partie fixe comprenant la face avant 3, la face arrière 4, le pavillon 5, et le soubassement de la carrosserie 6 et, d'autre part, par une partie mobile constituée par les montants convoyeurs de portes 1 et les portes battantes 2.

*Description des parties fixes:*

Chaque face latérale comprend un cadre très rigide formé par l'assemblage des éléments suivants:
— figures 1, 4 et 5: de la poutre supérieure 7, du pavillon 5, du montant latéral 8 de la face avant 3, du montant latéral 9 de la face arrière 4 et du profil de rive 6 du soubassement de la carrosserie. Ces cadres constituent les éléments résistants de la carrosserie. Ils servent de support aux parties mobiles.

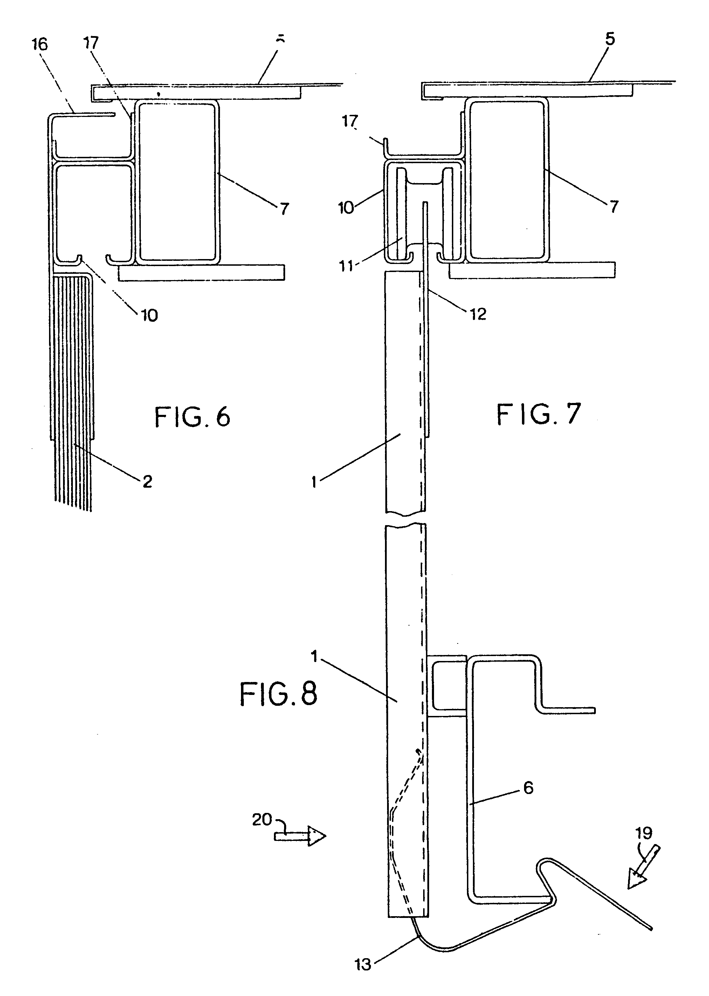

A cet effet, la poutre supérieure 7 de chaque cadre latéral supporte sur sa longueur (figures 6 et 7), un rail 10 dans lequel circulent des galets 11 solidaires des montants convoyeurs de portes 1. La description détaillée de ces dispositifs convoyeurs est faite avec les parties mobiles.

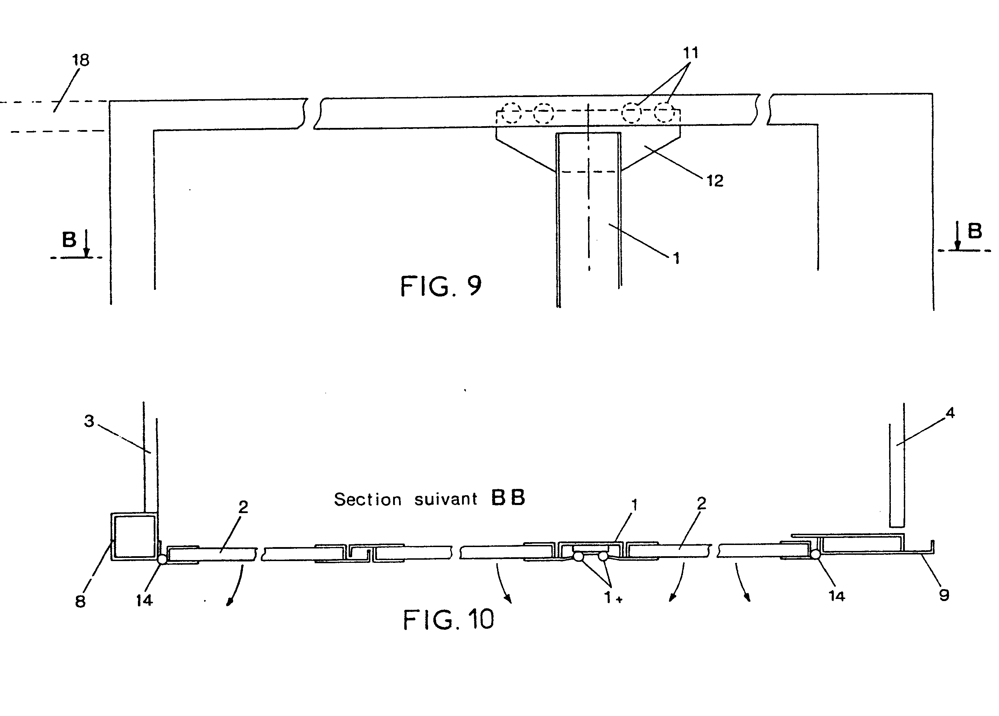

La partie centrale de la face avant 3 est conventionnelle, le montant extérieur 8 recevant la charnière de la porte latérale avant. Il en est de même pour la face arrière 4, le montant extérieur 9 recevant la charnière de la porte latérale arrière. La face arrière peut être pleine ou avoir des portes, ou encore tout autre dispositif d'ouverture permettant l'accès au volume de chargement arrière. Les figures 6 et 7 représentent la poutre 7 et le rail 10 et les figures 9 et 10 représentent les montants 8 et 9 en exécution métallique acier. D'autres matériaux métalliques tels que l'aluminium et ses alliages ou tout autre métal, ou encore le bois, le plastique, les agglomérés, leurs combinaisons entre eux ou avec des éléments métalliques peuvent être employés pour leur construction.

Les figures 6 et 7 représentent le pavillon 5 venant se fixer latéralement sur les poutres supérieures. Afin de permettre l'accès au volume de chargement par le toit (chargement vertical), le pavillon 5 peut être remplacé par un élément mobile (toile, rideau) de façon en soi connue.

*Description des parties mobiles et de leurs équipements:*

Elles comprennent principalement:
— les montants convoyeurs de portes 1, leur système de translation à leur extrémité supérieure (figure 7), leur système de verrouillage situé à leur extrémité inférieure (figure 8),
— les portes battantes 2, leur système d'articulation sur les montants 8 et 9 et sur les montants convoyeurs de portes 1 (figure 10). Le verrouillage des portes se fait par crémone logée dans l'épaisseur de la porte, ceci selon un procédé connu.

Les montants verticaux convoyeurs de portes 1 sont constitués dans le présent exemple par des profilés pliés de section en forme de U. A leur partie supérieure, les montants sont solidaires d'une flasque 12 (figures 7 et 9) supportant quatre galets 11 ou patins circulant dans le rail 10. La flasque 12 a pour rôle le maintien du montant 1 perpendiculairement au rail 10, dans le sens longitudinal du rail. A leur partie inférieure, les montants convoyeurs de portes 1 reçoivent un crochet ressort 13 (figure 8). Ce crochet 13 vient s'engager derrière l'aile inférieure de la bordure de rive 6 et verrouille le montant 1. Une traction vers le bas, sur l'extrémité 19 du crochet 13 libère le montant 1 qui peut ainsi reprendre son mouvement coulissant. Les charnières d'articulation 14 des portes 2 sont fixées sur les montants convoyeurs de portes 1 (figure 10).

Le rail 10 peut être prolongé par un rail mobile 18, escamotable, permettant le glissement des montants convoyeurs 1 au-delà de l'ouverture du côté. L'ouverture peut alors être totale.

Les portes battantes 2 sont articulées, soit sur les montants convoyeurs 1 verticaux soit sur les montants d'extrémité 8 et 9, par les charnières 14, en figure 10. Le verrouillage des portes lors de la fermeture est assuré par une crémone qui prend appui sur le rail 10 et la bordure de rive 6. L'étanchéité dans le haut des portes 2 est assurée par une cornière supérieure 16 et une gouttière 17, en figures 6 et 7.

Les montants 1 et leurs accessoires 11, 12, 13, les portes 2 et leurs encadrements, leurs cornières supérieures 16 et la gouttière 17, sont représentés en exécution métallique acier. D'autres matériaux métalliques tels que l'aluminium et ses ailliages ou autre métal ou encore le plastique, leur combinaison entre eux, peuvent être employés pour leur construction. Tout autre système remplissant la même fonction, entre dans le cadre du brevet.

Les panneaux des portes 2 peuvent être construits en tous matériaux rigides ou semi-rigides: bois, plastique, métal ou encore tout autre matériau sandwich.

Pour effectuer un chargement ou déchargement latéral: déverrouiller les crémones des portes 2, ouvrir les portes perpendiculairement à la paroi, déverrouiller les crochets 13 des montants 1 et faire coulisser ces derniers soit vers l'avant, soit vers l'arrière de la carrosserie, selon l'accès souhaité, les montants convoyeurs de porte 1 supportant chacun deux demi-portes 2.

L'ouverture obtenue est au minimum égale à 85% de la possibilité globale d'ouverture.

Pour fermer la paroi, il suffit d'opérer dans le sens contraire des opérations décrites ci-dessus, le verrouillage des montants 1 sur la bordure de rive 6 se fait par simple pression 20 sur l'extérieur des montants 1, les crochets 13, se verrouillent automatiquement.

Le domaine de la présente invention est celui des carrosseries destinées à être chargées et déchargées par les côtés. L'invention est adaptable à tous les véhicules routiers et matériels ferroviaires, ainsi qu'aux conteneurs et caisses mobiles ou amovibles, destinés aux transports routiers, ferroviaires, fluviaux, maritimes ou aériens.

Dans le mode de réalisation décrit, les portes pivotent sur des montants et les montants sont coulissants. Cette réalisation est préférée mais dans des variantes, les montants sont supprimés et les portes sont munies de moyens qui leur permettent de pivoter comme un battant et de se déplacer le long de l'ouverture. Ces moyens sont, par exemple, constitués par des axes montés à translation le long de l'ouverture et sur lesquels les portes pivotent.

Bien entendu, l'invention n'est pas limitée à ces modes de réalisation et des modifications restent possibles notamment en ce qui concerne les détails de construction, en restant dans le cadre de l'invention.

**Revendications**

1. Carrosserie comprenant une ouverture d'accès, pour le chargement et le déchargement, fermée par une suite de panneaux rigides dont certains au moins sont à volonté déplaçables à translation le long de l'ouverture d'accès, caractérisée en ce que les panneaux déplaçables sont des portes battantes (2), articulées à des montants verticaux (1) aptes à coulisser le long de l'ouverture, certains au moins desdits montants (1) étant communs à deux portes (2) qui se trouvent respectivement à droite et à gauche du montant correspondant.

2. Carrosserie selon la revendication 1, caractérisée en ce que les montants (1) sont munis en partie haute d'un dispositif (11, 12) apte à coulisser le long d'un rail (10) qui s'étend dans la longueur de l'ouverture.

3. Carrosserie selon la revendication 2, caractérisée en ce que ledit rail (10) est prolongé à une extrémité ou aux deux par des rails complémentaires (18), escamotables ou basculants, qui permettent de déplacer les montants (1) au-delà de ladite ouverture afin de dégager totalement l'ouverture.

4. Carrosserie selon l'une des revendications 1 à 3, caractérisée en ce que les montants (1) sont munis en partie basse d'un dispositif (13) apte à accrocher le montant, de façon détachable, à la carrosserie (6).

5. Carrosserie selon l'une des revendications 1 à 4, caractérisée en ce que les portes battantes (2) sont fixées aux montants (1) par des charnières (14) permettant de faire pivoter les portes vers l'extérieur jusqu'à ce qu'elles occupent une position sensiblement perpendiculaire au plan de l'ouverture.

6. Carrosserie selon la revendication 1, caractérisée en ce qu'elle comporte en outre des portes d'extrémité (2) montées battantes sur des montants fixes (8, 9) solidaires de la carrosserie.

7. Carrosserie selon l'une des revendications 1 à 6, caractérisée en ce que, pour chaque couple de portes (2) respectivement solidaires d'un montant (1, 8, 9) et d'un montant voisin, des moyens sont prévus pour fixer les deux portes l'une à l'autre et verrouiller l'une desdites portes à la carrosserie, de façon détachable, en position de fermeture.

8. Carrosserie selon l'une des revendications 1 à 7, caractérisée en ce que l'ensemble des portes (2) et des montants (1, 8, 9) constitue, en position de fermeture, une poutre apte à résister aux efforts de flexion susceptibles d'être imposés à la poutre par les conditions de service.

**Patentansprüche**

1. Karosserie mit einer Zugangsöffnung zum Laden und Entladen, die durch eine Reihe von starren Platten verschlossen ist, von denen mindestens einige willkürlich längs der Zugangsöffnung verlagerbar sind, dadurch gekennzeichnet, dass die verlagerbaren Platten Klapptüren (2) sind, die an vertikalen Stützen (1) angelenkt sind, welche längs der Öffnung gleitbar sind, wobei mindestens einige Stützen (1) jeweils zwei Türen (2) gemeinsam sind, welche sich jeweils rechts und links von der entsprechenden Stütze befinden.

2. Karosserie nach Anspruch 1, dadurch gekennzeichnet, dass die Stützen (1) in ihrem oberen Bereich mit einer Vorrichtung (11, 12) ausgerüstet sind, die ein Gleiten längs einer Schiene (10) ermöglicht, welche sich in Längsrichtung der Öffnung erstreckt.

3. Karosserie nach Anspruch 2, dadurch gekennzeichnet, dass die Schiene (10) an einem oder beiden Enden durch komplementäre, einziehbare oder einklappbare Schienen (18) verlängert ist, die ein Entfernen der Stützen (1) aus der besagten Öffnung zum vollständigen Freimachen der Öffnung ermöglichen.

4. Karosserie nach einem der Ansprüche 1 bis 3, dadurch gekennzeichnet, dass die Stützen (1) in ihrem unteren Bereich mit einer Vorrichtung (13) zum lösbaren Anbringen der Stützen an der Karosserie (6) ausgerüstet sind.

5. Karosserie nach einem der Ansprüche 1 bis 4, dadurch gekennzeichnet, dass die Klapptüren (2) an den Stützen (1) über Scharniere (14) befestigt sind, welche ein Schwenken der Türen nach aussen bis zu einer Stellung im wesentlichen senkrecht zur Öffnungsebene ermöglichen.

6. Karosserie nach Anspruch 1, dadurch gekennzeichnet, dass sie ausserdem Endtüren (2) umfasst, die klappbar an mit der Karosserie festen Stützen (8, 9) angebracht sind.

7. Karosserie nach einem der Ansprüche 1 bis 6, dadurch gekennzeichnet, dass für jedes Paar Türen (2), von denen eine mit der einen Stütze (1, 8, 9) und die andere mit einer benachbarten Stütze verbunden ist, Mittel zum Fixieren der beiden Türen miteinander und zum lösbaren Verriegeln einer der beiden Türen mit der Karosserie in Schliessstellung vorgesehen sind.

8. Karosserie nach einem der Ansprüche 1 bis 7, dadurch gekennzeichnet, dass die Gesamtheit der Türen (2) und der Stützen (1, 8, 9) in Schliessstellung einen Träger bildet, der im Betrieb auftretende Biegebeanspruchungen aufnimmt.

## Claims

1. Body comprising an access opening, for loading and unloading, closed by a series of rigid panels whereof at least some are able to be moved at will along the access opening, characterised in that the movable panels are folding doors (2), hinged on vertical uprights (1) able to slide along the opening, at least certain of the said uprights (1) being common to two doors (2) which are located respectively on the right and on the left of the corresponding uprights.

2. Body according to claim 1, characterised in that the uprights (1) are provided at the upper end with a device (11, 12) able to slide along a rail (10) which extends along the length of the opening.

3. Body according to claim 2, characterised in that the said rail (10) is extended at one or both ends by complementary rails (18), which can be retracted or are able to tilt, which make it possible to move the uprights (1) beyond the said opening in order to completely clear the opening.

4. Body according to one of claims 1 to 3, characterised in that the uprights (1) are provided in the lower part with a device (13) able to attach the upright to the body (6) in a detachable manner.

5. Body according to one of claims 1 to 4, characterised in that the folding doors (2) are fixed to the uprights (1) by hinges (14) making it possible to pivot the doors outwards until they occupy a position substantially perpendicular to the plane of the opening.

6. Body according to claim 1, characterised in that it also comprises end doors (2) mounted to fold back on fixed uprights (8, 9) integral with the body.

7. Body according to one of claims 1 to 6, characterised in that, for each pair of doors (2) respectively integral with an upright (1, 8, 9) and an adjacent upright, means are provided for fixing two doors one to the other and for locking one of the said doors to the body, in a detachable manner, in the closed position.

8. Body according to one of claims 1 to 7, characterised in that all the doors (2) and the uprights (1, 8, 9) constitute, in the closed position, a beam able to withstand bending stress likely to be imparted to the beam by the conditions of use.

0 159 206

FIG. 4
vue Avant

FIG. 1

FIG. 5
vue Arrière

Section suivant A A

FIG. 2    POSITION FERMEE

Section suivant A A

FIG. 3    POSITION OUVERTE

FIG. 6

FIG. 7

FIG. 8

0 159 206

**FIG. 9**

18

11

12

1

B

B

Section suivant B B

3

4

2

1

2

8

14

1 +

14

9

**FIG. 10**

FIG.11